# EUROPÄISCHE PATENTSCHRIFT

(11) **EP 0 953 123 B1**
(45) Veröffentlichungstag und Bekanntmachung des Hinweises auf die Patenterteilung: **22.08.2001**
(21) Anmeldenummer: 98901968.2
(22) Anmeldetag: 14.01.1998
(51) Int. Cl.: F16K 5/06

(54) **ABSPERRVENTIL FÜR ROHRLEITUNGEN**
SHUT-OFF VALVE FOR PIPES
ROBINET D'ARRET POUR CANALISATIONS

(30) Priorität: 16.01.1997 DE 19701213
(43) Veröffentlichungstag der Anmeldung: 03.11.1999
(73) Patentinhaber: Goldsweer, Karl Wilhelm, D-26826 Weener/Ems (DE)
(72) Erfinder: BRÜGGEMANN, Mario, Enrico, D-26826 Weener (DE)
(74) Vertreter: Sartorius, Peter, Dipl.-Ing.
(86) Internationale Anmeldenummer: EP9800182
(87) Internationale Veröffentlichungsnummer: WO9831956

(56) Entgegenhaltungen:
- DE-A- 1 804 604
- DE-A- 4 414 716
- DE-C- 4 409 796
- DE-U- 1 795 531
- GB-A- 1 293 381
- US-A- 3 336 938
- US-A- 3 367 359

## Beschreibung

Die Erfindung bezieht sich auf ein Absperrventil für Rohrleitungen und/oder Behälter zur Aufnahme von Flüssigkeiten.

Es ist bereits ein Absperrventil für Rohrleitungen bzw. für Flüssigkeitsbehälter bekannt, das mit einem Verschlußkörper und einer quer zur Schwingachse des Verschlußkörpers angeordneten Durchlaufbohrung zum Öffnen und Schließen des gesamten lichten Durchlaßquerschnitts ausgestattet ist (DE 44 09 796). Der Verschlußkörper ist in der Höhe des Durchlaßquerschnitts quer zur Längsachse zu einer Seite materialfrei ausgebildet. Die zur entgegengesetzten Seite weisende, verbleibende Außenwandung des Verschlußkörpers bildet die dichtende Abschlußfläche des lichten Durchlaßquerschnitts in der Strömungsachse. Der kugelförmige Verschlußkörper ist bis auf den Durchlaßquerschnitt von zwei Dichtungshalbschalen völlig umschlossen. Der Verschlußkörper ist in diesen Halbschalen gleitend und drehbar gelagert. Die beiden Verschlußkörper werden über das geteilte Gehäuse und entsprechende Schrauben zusammengehalten.

Aus der US-A-3 336 938 ist ebenfalls ein Absperrventil für Rohrleitungen zur Aufnahme von Flüssigkeiten bekannt, wobei das Absperrventil als teilbares Ventilgehäuse ausgebildet ist und lediglich aus einem elastischen Formkörper besteht, der zwischen dem Gehäuse und dem Kugelkörper eingebracht ist. Ein derartiges Ventil ist jedoch nicht geeignet, eine einwandfreie Abdichtung auch bei Einsatz von Reinigungsflüssigkeiten mit sehr hohen Temperaturen zu gewährleisten. Außerdem fehlt bei der bekannten Anordnung eine entsprechende Stabilisierung der Dichtungsschalen und eine Fixierung der als Trägerkörper ausgebildeten Einlage im Flanschbereich.

Der Erfindung liegt die Aufgabe zugrunde, ein Absperrventil der eingangs aufgeführten Art so auszubilden und anzuordnen, daß eine einwandfreie Abdichtung auch bei Einsatz von Reinigungsflüssigkeiten, die eine sehr hohe Temperatur aufweisen können, oder bei Verwendung von Sterildampf gewährleistet ist.

Die Aufgabe wird dadurch gelöst, daß die Dichtungsschalen eine Einlage aufweisen, die als Trägerkörper ausgebildet ist und sich bis in den Bereich eines Flansches der Dichtungsschale und/oder Durchlaßöffnung erstreckt, und daß die Einlage bzw. der Trägerkörper aus der Dichtungsschale herausragt und mit einem Flansch versehen ist, der dem Flansch zugeordnet ist.

Da die Flanschteile in eine Ausnehmung des Ventilgehäuses einsetzbar sind, lassen sich auf einfache Weise die beiden Dichtungsschalen gegen die Oberfläche des Verschlußkörpers und auch gegen die Innenoberfläche des Ventilgehäuses pressen und somit mit wenigen baulichen Mitteln eine sehr gute Abdichtwirkung zwischen Verschlußkörper und Ventilgehäuse erzielen, so daß bei Benutzung des Absperrventils auch nach längerem Einsatz eine Reinigung in kürzester Zeit durchgeführt werden kann, ohne daß dadurch die Qualität der Verschlußeinrichtung beeinträchtigt wird. Die bis in den Flanschbereich geführten Metalleinlagen sorgen selbst bei hohen Temperaturen für die nötige Steifigkeit der Dichtungsschale, um einen einwandfreien Einsatz zu gewährleisten.

Eine wesentliche Verbesserung wird dadurch erreicht, daß die Einlage der Dichtungsschale aus Stahl oder einer Stahllegierung besteht und schalenförmig ausgebildet ist und/oder in etwa der kugelförmigen Innenoberfläche der Dichtungsschale entspricht.

Der Flanschteil der Einlage ist hierbei mit seiner einen Oberfläche gegen die Dichtungsschale und mit seiner anderen Oberfläche gegen eine Seite der Ausnehmung zur Anlage bringbar.

Um eine ausreichende Vorspannung zu erhalten, ist es vorteilhaft, daß der Innendurchmesser der beiden Dichtungsschalen im zusammengefügten Zustand etwas kleiner ist als der Außendurchmesser des Verschlußkörpers und daß die Breite der beiden aneinander anliegenden Flansche der Dichtungsschale im nicht eingebauten Zustand etwas größer ist als die Breite der Ausnehmung im zusammengesetzten Zustand des Ventilgehäuses.

Eine zusätzliche Verbesserung kann man dadurch erreichen, daß die Dichtungsschalen zur Aufnahme mindestens eines Sicherungsrings bzw. O-Rings mindestens eine ringförmige, im Querschnitt halbkreisförmige Ausnehmung aufweisen, die im Bereich mindestens einer Stirnseite der Dichtungsschale vorgesehen ist.

In vorteilhafter Weise können die Dichtungsringe federelastisch ausgebildet sein. Ferner können diese als durchgehende bzw. einteilige Ringe oder auch als geteilte Ringe ausgebildet sein und aus einem gleitfähigen Material, beispielsweise aus Teflon, PTFE oder Delrin, gebildet sein. Ebenso können die Dichtungsschalen auch aus diesem Werkstoff hergestellt werden. Dadurch wird die Gleitfähigkeit zwischen dem Dichtungskörper und den Dichtungsschalen wesentlich verbessert. Zusätzlich kann die Oberfläche der Dichtungsschale oder die Oberfläche des Sitzes der Dichtungsschale im Ventilgehäuse mit einem entsprechenden Gleitmittel ausgestattet sein, um somit eine einwandfreie leichte Drehung des Verschlußkörpers im Ventilgehäuse sicherzustellen, andererseits jedoch nicht die Dichtfähigkeit herabzusetzen.

Ferner ist es möglich, daß die Dichtungsschale und/oder der Verschlußkörper im Bereich einer Schaltwelle zum Verstellen des Verschlußkörpers mindestens eine Ausnehmung zur Aufnahme eines geteilten bzw. axial halbierten O-Rings aufweist.

Weitere Einzelheiten der Erfindung sind in den Patentansprüchen und in der Beschreibung erläutert und in den Figuren dargestellt. Es zeigt:
- Figur 1: eine Explosionszeichnung des Absperrventils,
- Figur 2: eine Hälfte einer Dichtungsschale mit einem Trägerkörper,
- Figur 3: ein weiteres Ausführungsbeispiel einer Dichtungsschale, jedoch ohne Trägerkörper,
- Figur 4: eine Schnittdarstellung des Absperrventils mit den beiden gegenüberliegenden Dichtungsschalen und dem gleitend bzw. drehbar gelagerten Verschlußkörper in einer Durchflußstellung,
- Figur 5: ein weiteres Ausführungsbeispiel des Absperrventils in der gleichen Darstellung wie in Figur 4, jedoch mit einem in den Dichtungsschalen vorgesehenen Trägerkörper,
- Figur 6: verschiedene Ausführungsbeispiele zur Aufnahme einer O-Ring-Dichtung in den einzelnen Dichtungshalbschalen.

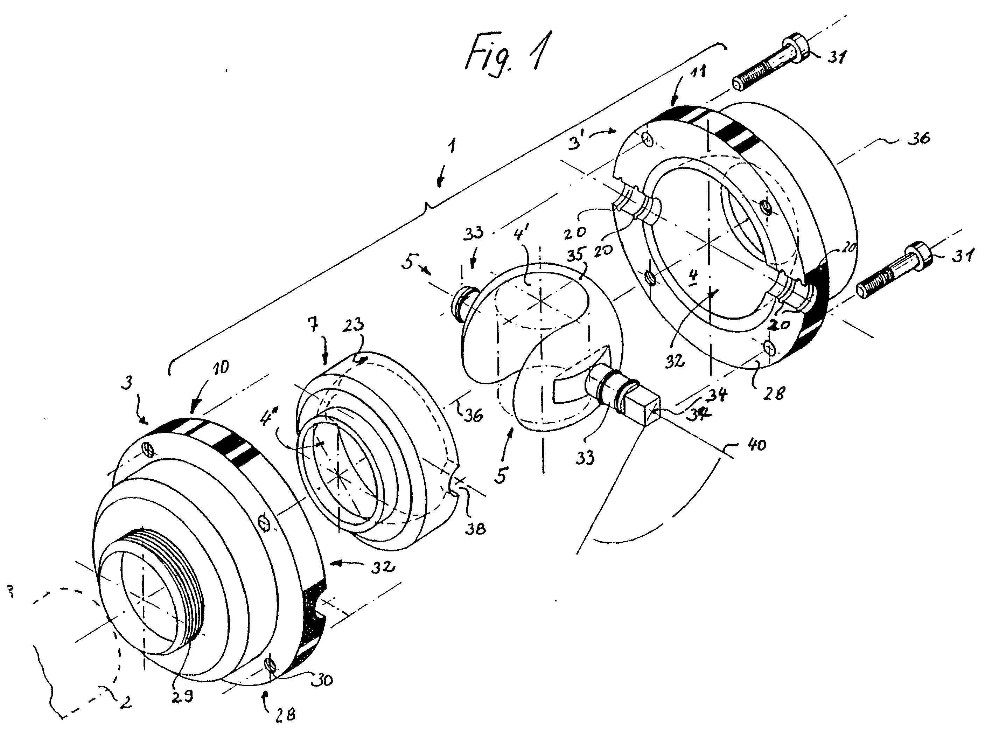

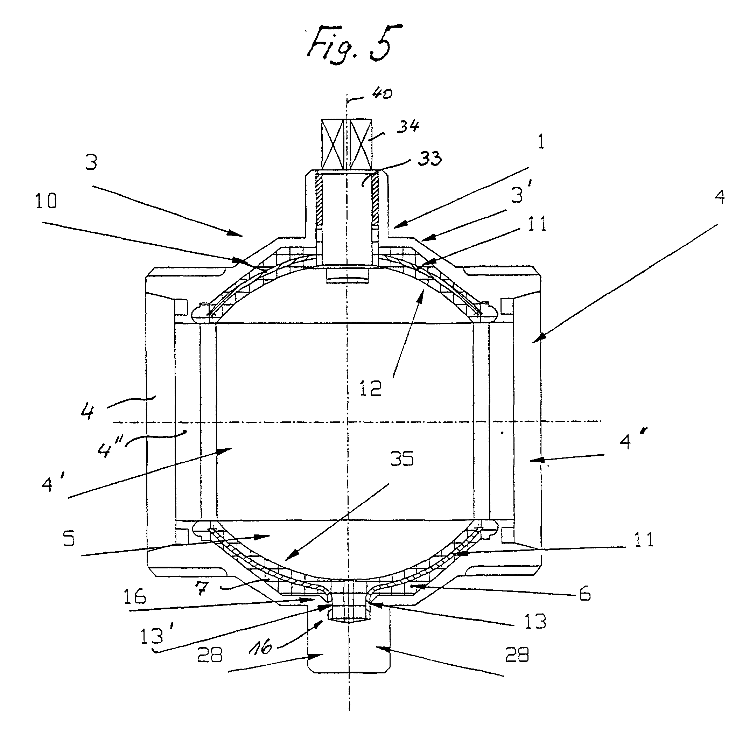

In der Zeichnung ist in Figur 1 das Absperrventil mit 1 bezeichnet, das aus einem teilbaren Ventilgehäuse 3, 3' besteht. Jede Hälfte des Ventilgehäuses 3, 3' weist einen Flansch 28 mit einem Gewindestutzen 29 zum Anschluß einer Rohrleitung 2 auf. Der Flansch 28 ist mit zahlreichen Bohrungen 30 zur Aufnahme von Schraubenbolzen 31 versehen, mittels derer die beiden Hälften des Ventilgehäuses 3, 3' gemäß Figur 5 gesichert bzw. zusammengehalten werden.

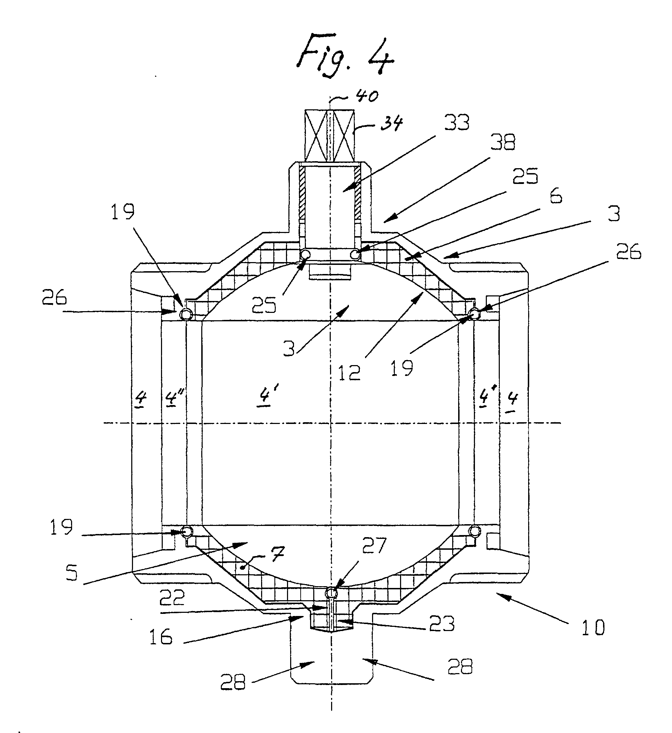

Das Ventilgehäuse 3, 3' bzw. die beiden Hälften des Ventilgehäuses sind mit je einem Ventilsitz 32 versehen, in den ein Verschlußkörper 5 einsetzbar ist. Der Verschlußkörper 5 ist kugelförmig ausgebildet und weist eine Durchlaßöffnung 4' auf, deren Durchlaßquerschnitt einer Durchlaßöffnung 4'' von zwei Dichtungsschalen 6, 7 und einer Durchlaßöffnung 4 des Ventilgehäuses 3 bzw. 3' in etwa entspricht. Wie aus den Figuren 4 und 5 hervorgeht, kann die Durchlaßöffnung 4' des Verschlußkörpers 5 exakt den gleichen Querschnitt wie die Durchlaßöffnung 4'' der Dichtungsschale 6 und 7 aufweisen.

Der Verschlußkörper 5 kann um eine Drehachse 40 um 90° gedreht werden. Hierzu weist dieser jeweils an der Oberfläche zwei Schwenkzapfen 33 auf, die auf der Achse 40 liegen. Der eine Schwenkzapfen 33 ist mit einem Vierkant 34 versehen. Durch Ansetzen eines Schlüssels auf den Vierkant 34 läßt sich der Verschlußkörper 5 um die Achse 40 drehen, so daß seine Durchlaßöffnung 4' koaxial zur Durchlaßöffnung 4 des Ventilgehäuses 3 und der Durchlaßöffnung 4'' der Dichtungsschalen 6 und 7 ausgerichtet ist.

Der Verschlußkörper 5 ist in der Höhe des Durchlaßquerschnitts quer zur Längsachse 40 zu einer Seite materialfrei ausgebildet, wobei eine zur entgegengesetzten Seite weisende, verbleibende Außenwandung 35 des Verschlußkörpers 5 allein die dichtende Abschlußfläche des lichten Durchlaßquerschnitts in einer Strömungsachse 36 bildet.

Die beiden koaxial zur Strömungsachse 36 ausgerichteten Dichtungsschalen 6 und 7 umgeben gemäß Figur 4 und 5 vollständig die Oberfläche des Verschlußkörpers 5 und dienen somit auch als Ventilsitz 32 für den Dichtungskörper 5.

In Figur 1 ist lediglich die linke Dichtungsschale 7 ohne Flansch 9 der Einfachheit halber wiedergegeben. Eine zweite Dichtungsschale 6 gemäß den Figuren 4 und 5 würde sich zwischen dem Verschlußkörper 5 und der rechten Hälfte des Ventilgehäuses 3' befinden. Beide Dichtungsschalen bzw. Dichtungshalbschalen 6, 7 werden im eingebauten Zustand gemäß Figur 4 und 5 gegenseitig zur Anlage gebracht und umgeben auf diese Weise vollständig den Verschlußkörper 5.

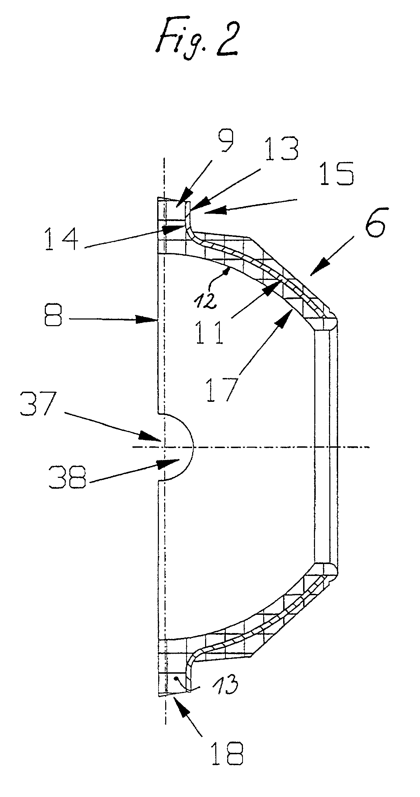

Die Dichtungsschalen bzw. Dichtungshalbschalen 6 und 7 können im Sitz 32 des Ventilgehäuses 3, 3' aufgenommen werden, wenn hierzu die Flansche 28 der Gehäusehälften 3, 3' gegeneinander zur Anlage gebracht werden. Damit eine ausreichende Flächenpressung zwischen der Oberfläche der Außenwandung 35 des Verschlußkörpers 5 und dem Sitz 32 im Ventilgehäuse 3 sichergestellt ist, sind die beiden Halbschalen 6, 7 gemäß Figur 2 bis 5 mit einem entsprechenden Flansch 9, 9' versehen, der ringförmig ausgebildet ist und lediglich durch eine Öffnung 38 zur Aufnahme der beiden Schwenkzapfen 33 unterbrochen ist. Der Außendurchmesser bzw. die Abmessungen des Flansches 9, 9' sind größer als der Außendurchmesser der Halbschalen 6 und 7. Im eingebauten Zustand werden die beiden Flansche der beiden Halbschalen 6 und 7 zur Anlage gebracht und in eine im Ventilgehäuse 3 vorgesehene Ausnehmung 16 eingeführt. In vorteilhafter Weise ist die Breite 18 der Flansche 9, 9' vor dem Einbau etwas größer als die Breite der Ausnehmung 16 des zusammengesetzten Ventilgehäuses 3. Ferner kann der Außendurchmesser des kugelförmig ausgebildeten Ventilverschlußkörpers 5 ebenfalls etwas größer sein als der Innendurchmesser 17 des Sitzes 32 im Ventilgehäuse 3, 3', so daß hierdurch eine entsprechende Vorspannung gewährleistet ist, wenn das Ventilgehäuse 3, 3' mit den Halbschalen 6, 7 zusammengesetzt wird.

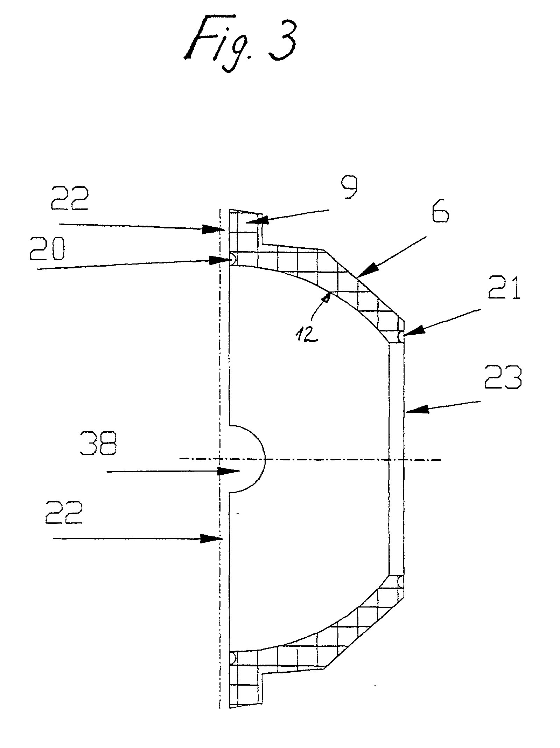

Eine in Figur 2 dargestellte Einlage 10 und 11 bzw. der Trägerkörper 10, 11 ist gemäß dem Ausführungsbeispiel in Figur 1 und 3 weggelassen. In diesem Fall ist die Dichtungsschale 6 aus einem wesentlich härteren bzw. widerstandsfähigeren Material gebildet als die Dichtungsschale 7 gemäß Ausführungsbeispiel in den Figuren 2 und 5. Dadurch muß eine sehr genaue Anpassung der Innenoberfläche 12 mit Bezug auf die Außenoberfläche bzw. Außenwandung 35 des Verschlußkörpers 5 sichergestellt werden, um eine einwandfreie Abdichtung zu erzielen. Auch in diesem Fall ist die Elastizität der Dichtungsschalen 6 und 7 größer als die Elastizität des Verschlußkörpers 5. In beiden Ausführungsbeispielen gemäß Figur 2 und 3 weist der Trägerkörper 10, 11 der Dichtungsschale 6 und 7 je einen Flansch 13 bzw. 13' mit einer Oberfläche 14 auf. Gemäß Figur 1 ist die Stirnseite 23 der Dichtungsschale 7 ebenso wie die Stirnseite 22 der Dichtungsschale 6 plan ausgebildet, so daß sie im eingebauten Zustand exakt gegeneinander anliegen und den Verschlußkörper 5 somit vollständig umgeben. Die Flanschteile 13, 13' der Dichtungsschalen 6 und 7 können in die im Ventilgehäuse 3 vorgesehene Ausnehmung 16 eingesetzt werden, so daß durch Zusammenpressen der beiden Gehäusehälften 3 und 3' des Ventilgehäuses eine hohe Flächenpressung aufgrund der Vorspannung zwischen der Innenoberfläche 12 der Dichtungsschalen 6 und 7 und der Außenwandung 35 des Verschlußkörpers 5 sichergestellt wird.

Die Abdichtung zwischen den Dichtungsschalen 6 und 7 und dem Verschlußkörper 5 läßt sich dadurch verbessern, daß O-Ringe 19, 25 und 26, 27 verwendet werden. Der O-Ring 19 kann als federelastischer Ring einteilig oder geteilt ausgebildet sein. Der O-Ring 19 befindet sich in einer entsprechenden Ausnehmung 20, die zu einem Teil in der Dichtungsschale 6 und zum anderen Teil in der gegenüberliegend angeordneten Dichtungsschale 7 vorgesehen ist. Mittels des O-Rings 19 wird die Flächenpressung zwischen der Innenoberfläche 12 der beiden Dichtungsschalen 6 und 7 und der Außenwandung 35 des Dichtungskörpers 5 weiter verbessert. Die im Bereich der Stirnseite 22 des Flansches 9' vorgesehenen Aussparungen bzw. Ausnehmungen 20 sind zur Aufnahme eines O-Rings 26 in ähnlicher Weise als Ausnehmung 21 an der Stirnseite 23 der Halbschale 7 vorgesehen. Die eine Hälfte der Ausnehmung 21 befindet sich also in der Halbschale 6 und die andere in der Gehäusehälfte 3 des Ventilgehäuses. Die O-Ringe 19 und 26 drücken also die Dichtungsschalen 6, 7 gegen die Oberfläche des Verschlußkörpers 5.

Um eine einwandfreie Abdichtung der Bohrung 38 im Ventilgehäuse 3 bzw. in der Bohrung des Verschlußkörpers 5 sicherzustellen, ist der Drehzapfen des Schwenkzapfens bzw. der Schaltwelle 33 über eine oder mehrere O-Ring-Dichtungen bzw. den O-Ring 25 abgedichtet, der hierzu auf dem Schwenkzapfen 33 sitzt und mit einem Teil in die Dichtungsschale 6 und 7 ragt.

Die O-Ringe 19, 26, die als Federringe ausgebildet sein können, können beispielsweise aus Teflon, PTFE oder Delrin bestehen. Der Werkstoff der Verschlußkörper 5 kann, wie bereits erwähnt, aus einem elastomeren Material, wie beispielsweise aus Kautschuk, gebildet sein. Ebenso ist es möglich, den Verschlußkörper 5 aus einem härteren Material, beispielsweise Teflon oder PTFE, herzustellen. Um eine einwandfreie Drehung des Verschlußkörpers 5 im Ventilgehäuse 3, 3' zu gewährleisten, sind die Oberflächen des Verschlußkörpers 3 und die Innenoberfläche der Dichtungsschalen 6 und 7 mit einer Gleitschicht versehen oder mit Teflon bzw. PTFE beschichtet.

Anhand der Figur 1 läßt sich der Zusammenbau des Absperrventils ohne weiteres erkennen. Zuerst wird der Verschlußkörper 5 in den Ventilsitz 32 der zusammenzufügenden Dichtungsschalen 6 und 7 eingebracht, wobei dann der Drehzapfen 33 in die entsprechende Bohrung 38 des Ventilgehäuses 3 eingesetzt wird. Anschließend können die beiden Dichtungsschalen 6 und 7 mit ihren Flanschen 9 und/oder 13 gegenseitig zur Anlage gebracht werden. Zuvor müssen die O-Ringe 19 bzw. 25 und 26 in die entsprechenden Ausnehmungen 20 und 21 eingesetzt werden. Danach lassen sich die beiden Dichtungsschalen 6 und 7 vollständig zusammenfügen und anschließend die Gehäusehälften 3, 3' des Ventilgehäuses mittels des Schraubenbolzens 31 sichern. Aufgrund der bereits erwähnten Vorspannung wird die gewünschte Abdichtung erzielt. Hierzu müssen die Schraubenbolzen 31, wie bereits erwähnt, in die Bohrungen 30 der Flansche 28 eingefügt und verschraubt werden. Jetzt wird die gewünschte Flächenpressung zwischen der Innenoberfläche 12 der Dichtungsschalen 6 und 7 und der Außenwandung 35 des Verschlußkörpers 5 erreicht und eine ganz exakte Abdichtung, die auch dann noch standhält, wenn hohe Durchflußgeschwindigkeiten auftreten oder Strömungsmittel mit sehr hohen Temperaturen verwendet werden.

Der Verschlußkörper 5 läßt sich nun durch Betätigen der Schaltwelle 33 aus der Stellung gemäß Figur 4 und 5 (Durchflußstellung) in eine Stellung gemäß Figur 1 (Sperrstellung) verstellen.

Ferner ist es möglich, an den stirnseitigen Enden der Dichtungsschalen 6 und 7 gummielastische Federringe in Form der bereits erwähnten O-Ringe vorzusehen, die in die entsprechenden Ausnehmungen 20 einsetzbar sind. Durch die Verwendung eines gummielastischen Federrings wird in vorteilhafter Weise der notwendige Anpreßdruck zwischen dem Dichtungskörper 5 und den Dichtungsschalen 6 und 7 verbessert.

Durch die Verwendung von Teflon, PTFE oder Delrin für den Dichtungswerkstoff bzw. für die Dichtungsschalen 6 und 7, insbesondere im Randbereich der Dichtungshalbschalen, wird in Verbindung mit den bereits beschriebenen Maßnahmen die Abdichtung des Absperrventils wesentlich verbessert, wobei auch bei einer Sterilisation bei sehr hohen Arbeitsdrücken, beispielsweise unter Verwendung von Dampf und heißen Flüssigkeiten, eine sehr gute Abdichtung gewährleistet ist.

Um eine kompakte Einheit für die Dichtungsschalen 6 und 7 mit dem darin enthaltenen Verschlußkörper 5 herzustellen, können die beiden Dichtungsschalen auch über einen elastomeren Kleber miteinander fest verbunden werden.

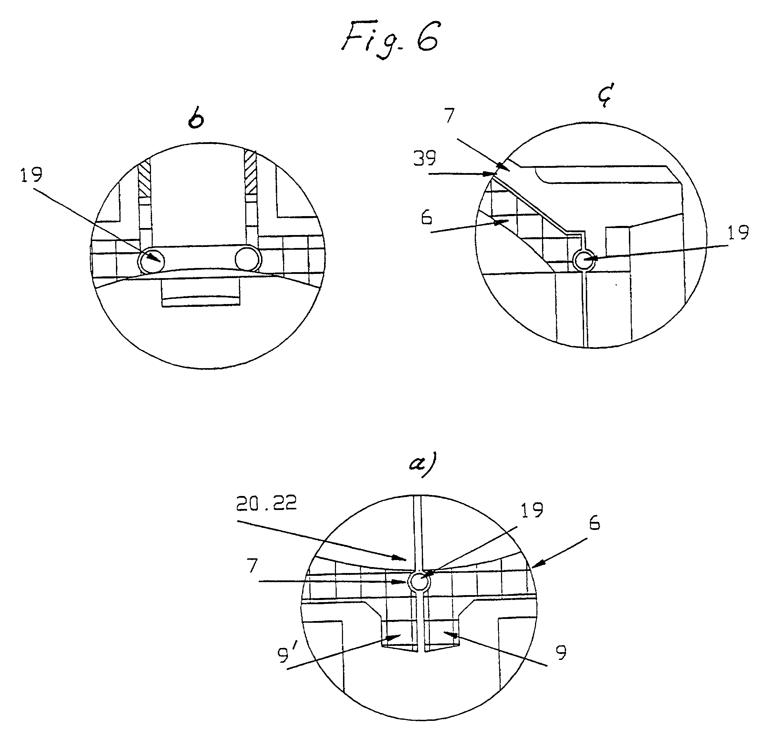

In Figur 6a bis 6c sind verschiedene Ausführungsbeispiele zur Aufnahme der O-Ringe 19 in den Dichtungsschalen 6 und 7 wiedergegeben.

In Figur 6c ist beispielsweise die Dichtungsschale 7 mittels einer Nase oder eines Ringflansches 39 über den zylindrischen Körper der Dichtungsschale 6 gestülpt.

## Patentansprüche

1. Absperrventil (1) für Rohrleitungen (2) und/oder Behälter zur Aufnahme von Flüssigkeiten, wobei das Absperrventil (1) ein teilbares Ventilgehäuse (3) mit einer Durchlaßöffnung (4) aufweist, in der ein ebenfalls eine Durchlaßöffnung (4') aufweisender, kugelförmiger Verschlußkörper (5) gleitend und/oder drehbar gelagert ist, der von zwei halbschalenförmigen Dichtungsschalen (6, 7) umschlossen ist, die eine der Durchlaßöffnung (4') des Verschlußkörpers (5) entsprechende Durchlaßöffnung (4'') bilden, wobei die Dichtungsschalen (6, 7) aus einem gegenüber dem Verschlußkörper (5) weicheren bzw. elastischeren Werkstoff bestehen, **dadurch gekennzeichnet,** daß die Dichtungsschalen (6, 7) eine Einlage (11) aufweisen, die als Trägerkörper ausgebildet ist und sich bis in den Bereich eines Flansches (9) der Dichtungsschale und/oder Durchlaßöffnung (4') erstreckt, und daß die Einlage bzw. der Trägerkörper aus der Dichtungsschale (6, 7) herausragt und mit einem Flansch (13, 13') versehen ist, der dem Flansch (9) zugeordnet ist.

2. Absperrventil nach Anspruch 1, dadurch gekennzeichnet, daß die Einlage (11) der Dichtungsschale (6, 7) aus Stahl oder einer Stahllegierung besteht und schalenförmig ausgebildet ist und/oder in etwa der kugelförmigen Innenoberfläche (12) der Dichtungsschale (6, 7) entspricht.

3. Absperrventil nach Anspruch 1, dadurch gekennzeichnet, daß der Flanschteil (13) mit seiner einen Oberfläche (14) gegen die Dichtungsschale (6, 7) und mit seiner anderen Oberfläche (15) gegen eine Seite der Ausnehmung (16) zur Anlage bringbar ist.

4. Absperrventil nach einem der vorhergehenden Ansprüche, dadurch gekennzeichnet, daß der Innendurchmesser (17) der beiden Dichtungsschalen (6, 7) im zusammengefügten Zustand etwas kleiner ist als der Außendurchmesser des Verschlußkörpers (5).

5. Absperrventil nach einem der vorhergehenden Ansprüche, dadurch gekennzeichnet, daß die Breite (18) der beiden aneinander anliegenden Flansche (9) der Dichtungsschale (6, 7) im nicht eingebauten Zustand etwas größer ist als die Breite der Ausnehmung (16) im zusammengesetzten Zustand des Ventilgehäuses (3).

6. Absperrventil nach einem der vorhergehenden Ansprüche, dadurch gekennzeichnet, daß die Dichtungsschalen (6, 7) zur Aufnahme mindestens eines Sicherungsrings bzw. O-Rings (19) mindestens eine ringförmige, im Querschnitt halbkreisförmige Ausnehmung (20) aufweisen, die im Bereich mindestens einer Stirnseite (22, 23) der Dichtungsschale (6, 7) vorgesehen ist.

7. Absperrventil nach einem der vorhergehenden Ansprüche, dadurch gekennzeichnet, daß die O-Ringe (25, 26, 27) als Federringe ausgebildet sind.

8. Absperrventil nach einem der vorhergehenden Ansprüche, dadurch gekennzeichnet, daß die O-Ringe (25, 26) und/oder die Dichtungsschale (6, 7) aus Teflon oder PTFE oder Delrin oder aus einem anderen elastischen Werkstoff gebildet sind.

9. Absperrventil nach einem der vorhergehenden Ansprüche, dadurch gekennzeichnet, daß zumindest ein Teil der einander berührenden Oberflächen zwischen dem Verschlußkörper (5) und der Dichtungsschale (6, 7) und/oder die O-Ringe (19) eine Gleitschicht oder eine Beschichtung aus Teflon oder PTFE aufweisen.

10. Absperrventil nach einem der vorhergehenden Ansprüche, dadurch gekennzeichnet, daß die Dichtungsschale (6, 7) und/oder der Verschlußkörper (5) im Bereich einer Schaltwelle (24) zum Verstellen des Verschlußkörpers (5) mindestens eine Ausnehmung (20) zur Aufnahme eines geteilten bzw. axial halbierten O-Rings (25) aufweist.

## Claims

1. Shut-off valve (1) for pipelines (2) and/or for tanks that hold liquids, whereby the shut-off valve (1) has a two-part valve housing (3) with a passage opening (4) in which there is a sliding and/or rotatably supported, spherical closure element (5) that likewise has a passage opening (4') and that is surrounded by two half-shell shaped sealing shells (6, 7) that form a passage opening (4") that corresponds to the passage opening (4') of the closure element (5), whereby the sealing shells (6, 7) consist of a softer or more elastic material in comparison to the closure element (5), **characterized in that** the sealing shells (6, 7) have an insert (11) that is configured as a support element and extends into the area of the flange (9) of the sealing shell and/or of the passage opening (4') and in that the insert or support element projects from the sealing shell (6, 7) arid is provided with a flange part (13, 13') that is associated with the flange (9).

2. Shut-off valve according to Claim I. **characterized in that the** insert (11) of the sealing shell (6, 7) is made of steel or of a steel alloy and is shell-shaped and/or approximately corresponds to the spherical inner surface (12) of the sealing shell (6, 7).

3. Shut-off valve according to Claim 1, **characterized in that** one of the surfaces (14) of flange part (13) can be brought into contact against the sealing shell (6, 7) and its other surface (15) can be brought into contact against one side of the recess (16).

4. Shut-off valve according to one of the preceding claims, **characterized in that** the inner diameter (17) of the two sealing shells (6, 7) - when they are joined - is somewhat smaller than the outer diameter of the closure element (5).

5. Shut-off valve according to one of the preceding claims, **characterized in that** the width (18) of the two adjacent flanges (9) of the sealing shell (6, 7) - when they are not assembled - is somewhat larger than the width of the recess (16) when the valve housing (3) is joined.

6. Shut-off valve according to one of the preceding claims, **characterized in that** the sealing shells (6, 7) have at least one ring-shaped recess (20) with a semicircular cross section to receive at least one locking ring or O-ring (19), whereby said recess (20) is provided in the area of at least one face (22, 23) of the sealing shell (6, 7).

7. Shut-off valve according to one of the preceding claims, **characterized in that** the O-rings (25. 26. 27) are configured as spring rings.

8. Shut-off valve according to one of the preceding claims, **characterized in that** the O-rings (25. 26) and/or the sealing shells (6, 7) are made of Teflon or PTFE or Delrin or of another elastic material.

9. Shut-off valve according to one of the preceding claims, **characterized in that,** at least a part of the surfaces that are in contact with each other between the closure element (5) and the sealing shell (6, 7) and/or the O-rings (19) have a lubricant layer or a coating of Teflon or PTFE.

10. Shut-off valve according to one of the preceding claims, **characterized in that** the sealing shells (6, 7) and/or the closure element (5) have at least one recess (20) for receiving a split or axially halved O-ring (25) in the area of a control shaft (24) for adjusting the closure element (5).

## Revendications

1. Robinet d'arrêt (1) pour tuyauteries (2) et/ou récipients destinés à recevoir des liquides, ledit robinet d'arrêt (1) présentant un carter de soupape divisible (3) avec une ouverture de passage (4) dans laquelle est logé de façon à pouvoir glisser et/ou pivoter un corps obturateur (5) sphérique présentant lui aussi une ouverture de passage (4') et qui est entouré de deux coquilles d'étanchéité (6, 7) en forme de demi-coquilles qui forment une ouverture de passage (4") correspondant à l'ouverture de passage (4') du corps obturateur (5), les coquilles d'étanchéité (6, 7) étant en un matériau plus souple ou plus élastique que celui du corps obturateur (5), **caractérisé en ce que** les coquilles d'étanchéité (6, 7) présentent une garniture (11) qui est conformée comme corps porteur et qui s'étend jusque dans la zone d'une bride (9) de la coquille d'étanchéité et/ou ouverture de passage (4') et que la garniture ou bien le corps porteur fait saillie de la coquille d'étanchéité (6, 7) et est pourvu d'une bride (13, 13') qui est assignée à la bride (9).

2. Robinet d'arrêt selon la revendication 1, caractérisé en ce que la garniture (11) de la coquille d'étanchéité (6, 7) est en acier ou en un alliage d'acier et se présente sous forme d'une demi-coquille et/ou correspond a peu près à la surface intérieure sphérique (12) de la coquille d'étanchéité (6, 7).

3. Robinet d'arrêt selon la revendication 1, caractérisé en ce que la surface (14) de la partie en bride (13) peut être appliquée contre la coquille d'étanchéité (6, 7) et la surface (15) de ladite partie en bride peut être appliquée contre une face du creux (16).

4. Robinet d'arrêt selon l'une quelconque des revendications précédentes, caractérisé en ce que le diamètre intérieur (17) des deux coquilles d'étanchéité (6, 7), lorsqu'elles sont assemblées, est légèrement inférieur au diamètre extérieur du corps obturateur (5).

5. Robinet d'arrêt selon l'une quelconque des revendications précédentes, caractérisé en ce que la largeur (18) des deux brides (9) de la coquille d'étanchéité (6, 7) qui s'appliquent l'une contre l'autre est, à l'état non assemblé, légèrement supérieure à la largeur du creux (16) lorsque le carter du robinet (3) est assemblé.

6. Robinet d'arrêt selon l'une quelconque des revendication précédentes, caractérisé en ce que les coquilles d'étanchéité (6, 7) présentent, pour le logement d'au moins une bague de sûreté ou joint torique (19), au moins un évidement annulaire (20) à section demi-circulaire prévu dans la zone d'au moins une face frontale (22, 23) de la coquille d'étanchéité (6, 7).

7. Robinet d'arrêt selon l'une quelconque des revendications précédentes, caractérisé en ce que les joints toriques (25, 26, 27) sont conformés comme rondelles-ressort.

8. Robinet d'arrêt selon l'une quelconque des revendications précédentes, caractérisé en ce que les joints toriques (25, 26) et/ou la coquille d'étanchéité (6, 7) sont en Téflon ou PTFE ou Delrin ou en un autre matériau élastique.

9. Robinet d'arrêt selon l'une quelconque des revendications précédentes, caractérisé en ce qu'au moins une partie des surfaces en contact entre le corps obturateur (5) et la coquille d'étanchéité (6, 7) et/ou les joints toriques (19) présentent une couche glissante ou un revêtement en Téflon ou en PTFE.

10. Robinet d'arrêt selon l'une quelconque des revendications précédentes, caractérisé en ce que la coquille d'étanchéité (6, 7) et/ou le corps obturateur (5) présente dans la zone d'un arbre de manoeuvre (24) destiné au réglage du corps obturateur (5), au moins un évidement (20) destiné à loger un joint toriqué (25) divisé ou partagé axialement en deux.
